# EUROPÄISCHE PATENTANMELDUNG

(11) **EP 4 703 299 A1**
(43) Veröffentlichungstag der Anmeldung: **04.03.2026**
(21) Anmeldenummer: 25199352.3
(22) Anmeldetag: 01.09.2025
(51) Int. Cl.: B65G 1/04

(54) **WARENLAGER FÜR DAS EIN- UND AUSLAGERN VON AUF LADUNGSTRÄGERN ANGEORDNETEN WAREN ODER WARENGEBINDEN**

(30) Priorität: 02.09.2024 DE 102024125017
(71) Anmelder: Nedcon B.V., 7005 AM Doetinchem (NL)
(72) Erfinder: te Vaarwerk, Calvin, 7122 NR Aalten (NL)
(74) Vertreter: Janke Scholl Patentanwälte PartG mbB

(57) **Zusammenfassung**

Gegenstand der Erfindung ist ein Warenlager für das Ein- und Auslagern von auf Ladungsträgern angeordneten Waren oder Warengebinden mittels eines Verteilerfahrzeugs, mit in einem Gestell (1) angeordneten, durch das Verteilerfahrzeug befahrbaren Transportgassen (5a, 5b), mit seitlich der Transportgassen (5a, 5b) in dem Gestell (1) angeordneten Lagerplätzen (15) für die Ladungsträger, und mit einer ebenfalls durch das Verteilerfahrzeug befahrbaren Verbindungsgasse (6), welche die Transportgassen (5a, 5b) an Querungen (10) kreuzt, wobei Bestandteile der Verbindungsgasse (6) und der Transportgassen (5a, 5b) Führungen (11, 12, 13, 14) sind, die jeweils eine durch das Verteilerfahrzeug befahrbare Laufschiene (20) und Seitenwände (21, 22) längs der Laufschiene (20) aufweisen, wobei ein Kreuzungsbereich (8) einer der Transportgassen (5a, 5b) mit einer der Verbindungsgassen (6) vier Querungen (10) aufweist, wobei der Kreuzungsbereich (8) als ein einstückiges Rahmenelement (24) ausgebildet ist, welches im Bereich der Querungen (10) mittels Verbindungselementen (40) auf einer gestellfesten horizontalen Auflagefläche (17) befestigt ist, wobei die Verbindungselemente (40) jeweils seitlich außerhalb der Laufschiene (20) und seitlich außerhalb der Ebene, in der sich die jeweilige Seitenwand (21, 22) erstreckt, angeordnet sind.

## Beschreibung

Die Erfindung betrifft ein Warenlager für das Ein- und Auslagern von auf Ladungsträgern angeordneten Waren oder Warengebinden mittels eines Verteilerfahrzeugs.

Solche Warenlager werden auch als "Shuttlelager" bezeichnet. Das Grundgerüst des Warenlagers bildet ein aus einer Vielzahl vertikaler und horizontaler Gestellelemente aufgebautes Gestell, in dem die Ladeeinheiten, z.B. größere Waren oder mit Waren beladene Paletten, an einzelnen Lagerplätzen gelagert werden, die sich zu beiden Seiten von Transportgassen befinden. Für das Einlagern, Auslagern oder auch Umlagern der Waren innerhalb des Warenlagers kommt ein in den Gassen fahrbares Verteilerfahrzeug zum Einsatz, oft als "Shuttle" oder "Satellitenfahrzeug" bezeichnet. Dieses ist dazu ausgebildet, die mit den Waren beladenen Ladungsträger zu unterfahren und anzuheben oder über Teleskoptechnik seitlich von dem Ladungsträger zu ziehen und dann an andere Positionen innerhalb des Warenlagers zu transportieren. Derartige Verteilerfahrzeuge arbeiten autonom und programmgesteuert und verfügen über Mittel, um die jeweiligen Ladungsträger vollautomatisch anzuheben, aus den seitlich angeordneten Lagerpositionen in die Gasse zu ziehen und dann innerhalb und längs der Transportgassen zu bewegen.

In den Transportgassen bewegt sich das Verteilerfahrzeug auf Rollen, die in gestellfest montierten Führungen laufen, wobei sich die Führungen aus einer Laufschiene, deren horizontale Oberseite die Lauffläche für die Rolle bildet, und Seitenwänden zusammensetzen. Um dem Verteilerfahrzeug in größeren Warenlagern einen Wechsel zwischen einzelnen Transportgassen zu ermöglichen, kann zusätzlich noch eine Verbindungsgasse quer zu den Transportgassen vorhanden sein. Dadurch ergeben sich Kreuzungsbereiche der Verbindungsgasse mit den Transportgassen. Da das Verteilerfahrzeug mit seinen Rollen entlang einer linken und einer rechten Führung rollt, ergeben sich in jedem Kreuzungsbereich insgesamt vier Querungen, an denen die Führungen kreuzförmig aufeinander zulaufen.

Besonders diese Querungen führen üblicherweise dazu, dass die Führungen in diesen Bereichen stark segmentiert sind, d. h. sie sind aus in Längsrichtung aufeinanderfolgenden, kürzeren oder längeren Schienensegmenten zusammengesetzt. Die dabei einander zugewandten Enden der Schienensegmente liegen auf einer gemeinsamen horizontalen Auflagefläche auf, zum Beispiel auf einer gestellfesten Konsole, und sind darauf vertikal verschraubt. Die als Schrauben ausgebildeten Verbindungselemente können selbst wenn die Oberseiten dieser Schrauben gegenüber den Laufflächen versenkt oder bündig angeordnet sind, beim Überfahren durch das Verteilerfahrzeug zu einer leichten Erschütterung führen, verbunden mit einer erhöhten Geräuschentwicklung.

Zur Reduzierung einer solchen Geräuschentwicklung schlägt die EP 3 321 216 A1 die Verwendung von vertikalen Einpressgewindebolzen als Verbindungselemente anstelle der sonst üblichen Senkkopfschrauben vor, wobei die dafür eingesetzten Einpressgewindebolzen so gestaltet sind, dass ihre Oberseite bündig mit der Lauffläche der Laufschiene abschließt, und so möglicherweise ein ruhiger Lauf des Verteilerfahrzeuges mit geringer Geräuschentwicklung erzielt wird. Der Einsatz entsprechend gestalteter Einpressgewindebolzen führt allerdings zu höheren Teilekosten im Vergleich zu herkömmlichen Verschraubungen.

Ebenfalls zur Reduzierung der Geräuschentwicklung im Bereich der Stoßverbindungen zwischen aufeinanderfolgenden Führungen schlägt die DE 10 2010 029 563 B4 vor, dass nicht alle Stoßverbindungen in Laufrichtung gesehen auf gleicher Höhe angeordnet sind, sondern sie zueinander versetzt angeordnet sind. Das Verteilerfahrzeug überfährt bei seiner Bewegung entlang der Schienensegmente nicht auf beiden Seiten gleichzeitig die dort vorhandenen Stöße. Für die Befestigung der Führungen bzw. Schienensegmente werden Schrauben mit im Wesentlichen horizontaler Verschraubungsachse verwendet, so dass sich die Schrauben außerhalb der Laufflächen der Führungen befinden.

Bei dem Warenlager gemäß der DE 10 2014 114 496 A1 weisen Schienensegmente in Schienenlängsrichtung gesehen links und rechts neben dem Schienenstoß je eine erste Aufnahme für jeweils ein sich senkrecht zur Schienenlängsrichtung erstreckendes, bolzenförmiges Befestigungsmittel auf. Ferner ist eine Befestigungsklammer vorhanden. Diese weist zwei U-förmige Aussparungen auf zur jeweiligen Aufnahme der Befestigungsmittel, wobei die U-förmigen Aussparungen an dem jeweils äußeren Schenkel abgewinkelt ausgebildet sind.

Der Erfindung liegt die **Aufgabe** zugrunde, bei einem Warenlager, insbesondere in der Bauart als Shuttlelager, unter Nutzung des Vorteils geringer Teilekosten solche Geräusche und Erschütterungen im Bereich von Querungen der Kreuzungsbereiche zu reduzieren, die ansonsten beim Überfahren durch das Verteilerfahrzeug ("Shuttle") auftreten würden.

Die **Lösung** dieser Aufgabe erfolgt erfindungsgemäß mit den Merkmalen des unabhängigen Anspruchs 1. Zweckmäßige Ausgestaltungen und vorteilhafte Weiterbildungen der Erfindung sind in den Unteransprüchen angegeben.

Das Warenlager gemäß der Erfindung weist in einem Gestell angeordnete, durch das Verteilerfahrzeug befahrbare Transportgassen, mit seitlich der Transportgassen in dem Gestell angeordneten Lagerplätzen oder Fördertechnikübergabepositionen für die Ladungsträger, und mit einer ebenfalls durch das Verteilerfahrzeug befahrbaren Verbindungsgasse, welche die Transportgassen an Querungen kreuzt, auf, wobei Bestandteile der Verbindungsgasse und der Transportgassen Führungen sind, die jeweils eine durch das Verteilerfahrzeug befahrbare Laufschiene und Seitenwände längs der Laufschiene aufweisen, wobei ein Kreuzungsbereich einer der Transportgassen mit einer der Verbindungsgassen vier Querungen aufweist, wobei der Kreuzungsbereich als ein einstückiges Rahmenelement ausgebildet ist, welches im Bereich der Querungen mittels Verbindungselementen auf einer gestellfesten horizontalen Auflagefläche befestigt ist, wobei die Verbindungselemente jeweils seitlich außerhalb der Laufschiene und seitlich außerhalb der Ebene, in der sich die jeweilige Seitenwand erstreckt, angeordnet sind.

Erfindungsgemäß ist es nunmehr vorgesehen, dass der Kreuzungsbereich nicht mehr aus mehreren Einzelteilen besteht, sondern aus einem einstückigen Rahmenelement, welches die Führungen und vier Querungen beinhaltet. Das Rahmenelement kann dann als ein Stück mittels Verbindungselementen auf einer oder mehreren gestellfesten horizontalen Auflageflächen befestigt werden. Das den Kreuzungsbereich ausbildende einstückige Rahmenelement weist vorzugsweise im Wesentlichen eine Viereckform auf, wobei in den Ecken der Viereckform die Querungen ausgebildet sind. Die Querungen des einstückigen Rahmenelements sind über die Führungen miteinander verbunden. Durch diese Ausgestaltung kann die Anzahl der zu montierenden Teile eines Gestells eines Warenlagers und damit des Warenlagers selber wesentlich reduziert werden, was zudem zu einer Reduzierung der notwendigen Montagezeit führt. Zudem können durch die Reduzierungen von Einzelteilen notwendige Toleranzen reduziert werden. Durch die einstückige Ausbildung insbesondere in den Querungen kann auch ein Überfahren durch das Verteilerfahrzeug gleichmäßiger erfolgen, so dass Stöße und Erschütterungen vermieden werden können. Hierdurch können Geräuschentwicklung reduziert werden, was auch zu einer reduzierten Beanspruchung und einem reduzierten Verschleiß an den beteiligten Bauteilen und Komponenten des Gestells und auch an dem Verteilerfahrzeug führen kann. Dieser Vorteil wirkt sich besonders im Bereich der Querungen zweier Gassen aus, entlang denen das Verteilerfahrzeug wahlweise fahrbar ist. Der Bereich der Querungen wird im Rahmen des Betriebsablaufs besonders häufig durch die Räder bzw. Rollen des Verteilerfahrzeugs überfahren, weshalb in diesem Bereich auch die Dauerbelastung besonders hoch ist.

Im Bereich der Querungen ist der als einstückiges Rahmenelement ausgebildete Kreuzungsbereich mittels Verbindungselementen auf einer gestellfesten Auflagefläche befestigt. Vorzugsweise ist das Rahmenelement an jeder Querung mittels Verbindungselementen auf einer gestellfesten Auflagefläche befestigt. Die Auflagefläche ist vorzugsweise jeweils eine flache Oberseite einer stabil gestalteten Platte. Entscheidend ist auch in diesem Fall, dass jedes Verbindungselement seitlich außerhalb der Laufschiene und seitlich außerhalb der Ebene, in der sich die jeweilige Seitenwand erstreckt, angeordnet ist, so dass von ihm beim Vorbeifahren des Verteilerfahrzeugs keine Erschütterungen ausgehen.

Bevorzugt sind an jeder Querung vier Verbindungselemente vorgesehen, über welche das Rahmenelement an der jeweiligen Auflagefläche befestigt werden kann. Dies ermöglicht eine besonders sichere und stabile Befestigung des Rahmenelements an den Auflageflächen.

Besonders bevorzugt ist es vorgesehen, dass die Verbindungselemente nicht nur zur Befestigung des Rahmenelements an der Auflagefläche dienen, sondern dass die Verbindungselemente auch gleichzeitig eine Führung für die Verteilerfahrzeuge ausbilden, wenn diese im Kreuzungsbereich von einer Transportgasse in eine Verbindungsgasse oder umgekehrt umgeleitet werden. Die Verbindungselemente können dann die Kurvenfahrt der Verteilerfahrzeuge unterstützen. Hierfür kann es vorzugsweise vorgesehen sein, dass die Verbindungselemente jeweils eine in Richtung der Querung zeigende kurvenförmige Außenfläche aufweisen können, wobei über die kurvenförmige Außenfläche im Bereich der Querung eine Seitenwand einer Führung mit einer Seitenwand einer sich quer dazu erstreckenden Führung verbunden sein kann. Die kurvenförmige Außenfläche bildet vorzugsweise eine Rundung, insbesondere eine konvexe Rundung, aus. Die kurvenförmige Außenfläche kann beispielsweise einen Viertelkreis ausbilden.

Um eine möglichst unterbrechungsfreie, formschlüssige Anbindung zwischen den Führungen, insbesondere den Seitenwänden der Führungen, und den Verbindungselementen erreichen zu können, können die Verbindungselemente jeweils mindestens einen Hinterschnitt zur Aufnahme eines Kantenbereichs einer Seitenwand einer Führung aufweisen. Der Kantenbereich einer Seitenwand kann dann in den Hinterschnitt eingreifen, so dass eine möglichst spaltfreie Anbindung der Seitenwand an das Verbindungselement erreicht werden kann. Vorzugsweise weist jedes Verbindungselement zwei derartiger Hinterschnitte auf. Die Hinterschnitte schließen vorzugsweise unmittelbar an die kurvenförmige Außenfläche des Verbindungselements an, so dass dann die kurvenförmige Außenfläche zwischen zwei derartigen Hinterschnitten ausgebildet sein kann. Die Hinterschnitte können jeweils die Form einer länglichen Nut aufweisen. Die Hinterschnitte können derart lang ausgebildet sein, dass sie den gesamten Kantenbereich einer Seitenwand aufnehmen können.

An dem Rahmenelement können im Bereich der Querungen seitlich abstehende Laschen angeformt sein. Das jeweilige Verbindungselement kann dann in eine Öffnung oder Ausnehmung in der Lasche eingreifen. Durch die seitlich abstehenden Laschen kann die Befestigung entfernt von der jeweiligen Laufschiene der Führungen erfolgen. Vorzugsweise ist an jeder Ecke der Querung eine derartige Lasche an dem Rahmenelement ausgebildet, so dass pro Querung vier Laschen an dem Rahmenteil ausgebildet sein können.

Die Verbindungselemente können jeweils eine Unterseite aufweisen. Mit dieser Unterseite können die Verbindungselemente in einem montierten Zustand auf der seitlich abstehenden Lasche aufliegen. Um zusätzlich zu einer kraftschlüssigen Verbindung zwischen dem Verbindungselement und dem Rahmenelement bzw. der Lasche des Rahmenelements auch eine formschlüssige Verbindung ausbilden zu können, kann an der Unterseite des Verbindungselements eine Kontur zur passgenauen Aufnahme der Lasche ausgebildet sein. Die Lasche kann dann in die Kontur eingreifen. Die Kontur ist dafür vorzugsweise derart geformt, dass diese eine Negativform der Lasche ausbildet. Die Kontur kann in Form einer Vertiefung an der Unterseite des Verbindungselements ausgebildet sein. Die Kontur kann eine Dreiecksform aufweisen.

Um eine möglichst schnelle und einfache Befestigung mittels der Verbindungselemente zu ermöglichen, können die Verbindungselemente jeweils einen Rastbereich zum rastenden Verbinden des Rahmenelements an der Auflagefläche aufweisen.

Der Rastbereich kann einen von der Unterseite des jeweiligen Verbindungselements hervorstehenden Rastzapfen aufweisen, welcher im montierten Zustand durch die Öffnung oder Ausnehmung in der Lasche des Rahmenelements und durch eine an der Auflagefläche ausgebildete Öffnung hindurchgreifen und an einer Unterseite einer die Auflagefläche aufweisenden Platte hinterrasten kann. Der Rastzapfen kann eine längliche Form aufweisen und an einem freien Ende eine Rastnase zum Hintergreifen der Unterseite der Platte aufweisen. Bevorzugt kann der Rastzapfen zweigeteilt sein, so dass vorzugsweise zwei symmetrisch zueinander geformte Teile den Rastzapfen ausbilden. Diese beiden Teile können beabstandet zueinander sein, so dass diese zueinander federn können. Beim Montieren können diese Teile aufeinander zu bewegt und dadurch zusammengedrückt werden, um durch die Öffnungen der Lasche und durch die Öffnung der Auflagefläche bzw. der Platte hindurchgeführt werden zu können. Sobald die beiden Teile in die Öffnungen eingreifen, können die Teile auseinander federn, so dass die Rastnase des Rastzapfens, welcher an beiden Teilen ausgebildet ist, die Unterseite der Platte hintergreifen kann.

Alternativ ist es auch möglich, dass die Verbindungselemente keinen Rastbereich aufweisen, sondern mittels einer Schraubverbindung zum Verbinden des Rahmenelements an der Auflagefläche befestigt werden.

Die Verbindungselemente können jeweils einen Grundkörper aufweisen. An der Unterseite des Grundkörpers kann dann der Rastzapfen des Verbindungselements angeformt sein. Der Grundkörper kann dann der Teil des Verbindungselements sein, welcher zwischen zwei quer zueinander angeordneten Seitenwänden angeordnet ist. Mittels des Grundkörpers kann im Wesentlichen die Führung des Verteilerfahrzeugs im Bereich der Querungen ausgebildet werden. Der Grundkörper kann zumindest bereichsweise als Hohlprofil ausgebildet sein, wobei in dem Hohlprofil Versteifungsrippen ausgebildet sein können. Durch die Ausbildung als Hohlprofil kann Material eingespart werden. Die Versteifungsrippen gewährleisten trotzt der Ausbildung als Hohlprofil eine hohe Festigkeit und Stabilität des Grundkörpers und damit des Verbindungselements. Durch die Versteifungsrippen können beim Passieren der Verteilerfahrzeuge auftretende Kräfte aufgenommen werden.

Die Verbindungselemente können vorzugsweise jeweils aus einem Kunststoffmaterial oder einem Metallmaterial ausgebildet sein. Die Verbindungselemente können dann zum Beispiel in einem Spritzgussverfahren oder 3D-Drucker hergestellt sein.

Um die Stabilität und insbesondere die Festigkeit der Verbindung des Rahmenelements an der bzw. den Auflageflächen weiter zu erhöhen, kann es vorgesehen sein, dass das Rahmenelement zusätzlich zu den Verbindungselementen mit mindestens einer Schraubverbindung an der Auflagefläche befestigt ist.

Das Rahmenelement kann beispielsweise als ein Stanz-Biegeteil ausgebildet sein. Weiter ist es auch möglich, dass das Rahmenelement aus einer Metallplatte ausgeschnitten und zur Ausbildung der Seitenwände gekantet ist.

Um die Montage des als einstückigen Rahmenteils ausgebildeten Kreuzungsbereichs in dem Gestellt zu erleichtern, kann an mindestens zwei sich gegenüberliegenden Seitenwänden einer oder mehrerer der Führungen eine Positionierhilfe zum Ausrichten des Rahmenelements bei einer Montage ausgebildet sein. Die Positionierhilfe ermöglicht ein Ausrichten des Rahmenelements mittels eines Messgerätes, insbesondere eine Laser-Messgerätes.

Die Positionierhilfe kann beispielsweise in Form jeweils einer Aussparung an den Seitenwänden ausgebildet sein. Die Aussparung kann beispielsweise Form eines Schlitzes oder einer Kerbe ausgebildet sein. Die Positionierhilfe kann somit bereits beim Schneiden oder Stanzen des Rahmenelements in das Rahmenelement eingebracht werden.

Weitere Vorteile und Einzelheiten werden nachfolgend anhand der Zeichnungen erläutert. Darin zeigen:
- Fig. 1: eine Draufsicht auf einen Teil eines Warenlagers für das Ein- und Auslagern von auf versetzbaren Ladungsträgern angeordneten Waren oder Warengebinden;
- Fig. 2: eine vergrößerte Draufsicht auf den in Fig. 1 mit "II" markierten Kreuzungsbereich;
- Fig. 3: eine perspektivische Darstellung des in Fig. 2 gezeigten Kreuzungsbereichs;
- Fig. 4: eine perspektivische Darstellung der in Fig. 2 mit "III" markierten Querung;
- Fig. 5: eine perspektivische Darstellung des in Fig. 1 mit "IV" markierten Ausschnitts;
- Fig. 6: eine perspektivische Draufsicht auf die in Fig. 5 mit "V" markierten Querung von unten;
- Fig. 7: eine perspektivische Darstellung des Rahmenelements des in Fig. 1 gezeigten Kreuzungsbereichs;
- Fig. 8: die perspektivische Darstellung einer Querung des Rahmenelements;
- Fig. 9: eine perspektivische Darstellung eines Verbindungselements in einer Draufsicht von oben;
- Fig. 10: eine perspektivische Darstellung des Verbindungselements in einer Draufsicht von unten;
- Fig. 11: eine weitere perspektivische Darstellung des Verbindungselements in einer Draufsicht von unten;
- Fig. 12: eine perspektivische Darstellung des Verbindungselements seitlich gedreht; und
- Fig. 13: eine perspektivische Darstellung einer Querung ohne Auflagefläche von unten.

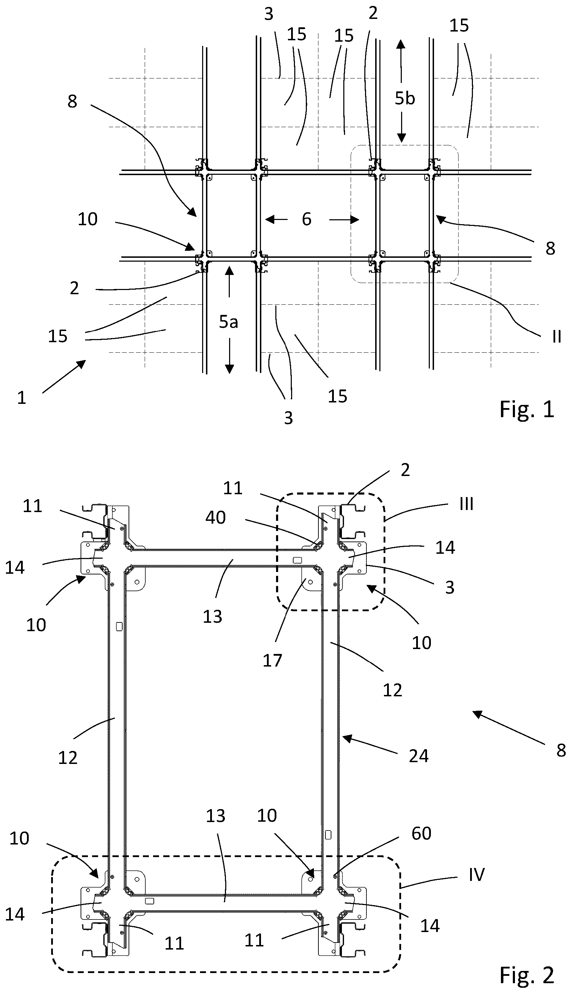

Das statische Grundgerüst des in Fig. 1 nur zu einem Teil abgebildeten Warenlagers bildet ein Gestell 1, welches sich aus einer Vielzahl von vertikalen Elementen 2, insbesondere Stützen, horizontalen als jeweils einer Platte 3 ausgebildeten Elementen und ggf. verstärkenden Diagonalelementen zusammensetzt.

Innerhalb des ausgedehnten Gestells 1 ist ein motorgetriebenes Verteilerfahrzeug, auch als "Shuttle" bezeichnet, in verschiedene Positionen verfahrbar, um von diesen Positionen aus Waren, die sich auf standardisierten Ladeeinheiten, wie beispielsweise Behälter oder Kartons als Ladungsträger befinden, ein- und auszulagern. Das Verteilerfahrzeug ist dazu ausgebildet, die mit den Waren beladenen Ladungsträger zu unterfahren, dann anzuheben oder zu ziehen und anschließend an eine andere Position innerhalb des Warenlagers zu transportieren. Solche Verteilerfahrzeuge arbeiten autonom und programmgesteuert. Sie laufen auf mindestens drei Rollen und werden seitlich geführt und beides findet statt in gestellfesten Führungen, die sich innerhalb des ausgedehnten Gestells 1 erstrecken. Die Rollen des Verteilerfahrzeugs sind vorzugsweise alle angetrieben.

Für das Verfahren innerhalb des Warenlagers sind darin mehrere Gassen vorhanden, wobei Fig. 1 in einem Ausschnitt des Warenlagers zwei durch das Verteilerfahrzeug befahrbare Transportgassen 5a, 5b zeigt. Zu beiden Seiten der Transportgassen 5a, 5b befinden sich in dem Gestell 1 einzelne Lagerplätze 15 oder Fördertechnikübergabepositionen, so dass auf diesen Lagerplätzen 15 abgestellte Ladungsträger durch das Verteilerfahrzeug aus dieser jeweiligen Position entnommen oder an dieser Position eingelagert werden können. Die einzelnen Lagerplätze 15 oder Fördertechnikübergabepositionen befinden sich zu einer oder beiden Seiten der Transportgassen 5a, 5b und lassen sich daher durch das in der Transportgasse 5a, 5b vor dem betreffenden Lagerplatz 15 positionierte Verteilerfahrzeug bedienen.

Die Transportgassen 5a, 5b sind parallel zueinander angeordnet. Um dem Verteilerfahrzeug einen Wechsel zwischen den Gassen 5a, 5b zu ermöglichen, ist in dem Gestell 1 eine querende Gasse als Verbindungsgasse 6 angeordnet, die ebenfalls durch dasselbe Verteilerfahrzeug befahrbar ist. Durch diese Anordnung der Gassen 5a, 5b, 6 ergeben sich Kreuzungsbereiche 8, in denen das Verteilerfahrzeug nicht nur geradeaus durchfahren kann, sondern auch seine Fahrt in Querrichtung ändern kann.

Da solche Verteilerfahrzeuge üblicherweise in Fahrtrichtung links und in Fahrtrichtung rechts Räder oder Rollen aufweisen und daher insgesamt zwei Fahrspuren benötigen und dies auch für die jeweils andere, also quer angeordnete Gasse gilt, befinden sich in den Kreuzungsbereichen 8 der Transportgassen 5a, 5b mit der Verbindungsgasse 6 jeweils insgesamt vier Querungen 10. Als Querung 10 wird hier der Ort bezeichnet, an dem Führungen 11, 12, 13, 14 für das Verteilerfahrzeug rechtwinklig zusammentreffen. Im Bereich jeder Querung 10 laufen daher insgesamt vier durch Führungen 11, 12, 13, 14 gebildete Fahrspuren kreuzförmig aufeinander zu.

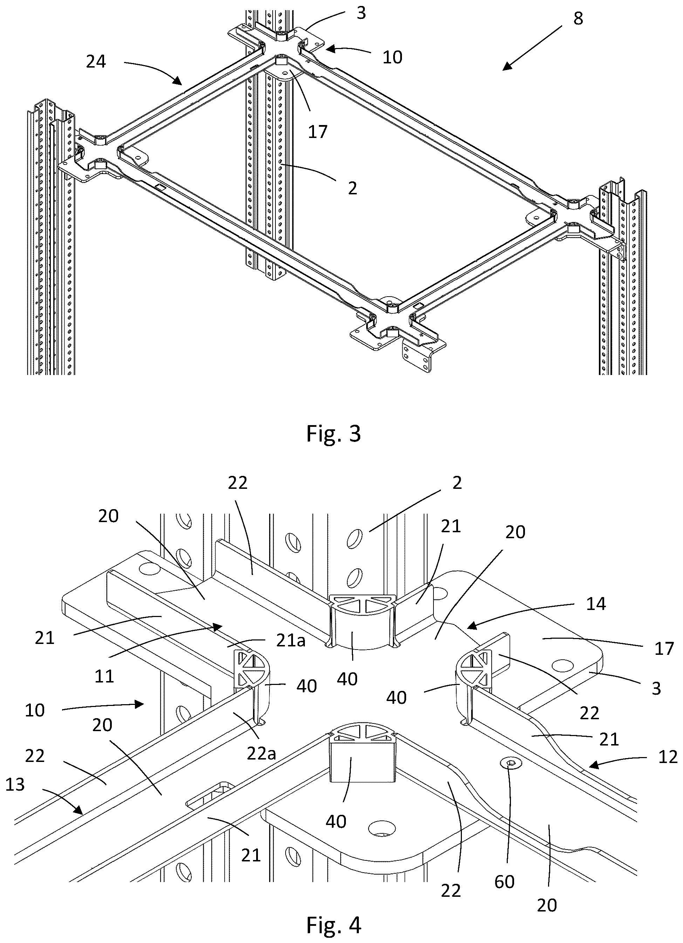

Die Fig. 2 und 3 zeigen, als Vergrößerung aus Fig. 1, einen kompletten Kreuzungsbereich 8 mit den insgesamt vier Querungen 10, an denen jeweils vier durch Führungen 11, 12, 13, 14 gebildete Fahrspuren für die Räder des Verteilerfahrzeuges in Kreuzform aufeinander zulaufen. Der Kreuzungsbereich 8 weist ein einstückiges Rahmenelement 24 auf, an welchen die Führungen 11, 12, 13, 14 und die Querungen 10 zusammen als ein Stück bzw. ein Bauteil ausgebildet sind.

Um dem Verteilerfahrzeug zu ermöglichen, nach seiner Ankunft im Kreuzungsbereich 8 die Fahrt in eine Querrichtung fortzusetzen, können, je nach Aufbau des Verteilerfahrzeugs, entweder dessen Räder bzw. Rollen ihre Rollrichtung verändern, oder aber das Verteilerfahrzeug ist mit zwei Radsätzen versehen, von denen drei oder vier Rollen bzw. Räder bei der Fahrt entlang der Transportgassen 5a, 5b, und drei oder vier andere Rollen bzw. Räder bei der Fahrt entlang der Verbindungsgasse 6 zum Einsatz kommen. Die Lauffläche und damit jene Ebene, in der die Räder des Verteilerfahrzeugs abrollen, ist aber immer dieselbe, d. h. die Laufflächen an sämtlichen an der Querung 10 zusammentreffenden Führungen 11, 12, 13, 14 befinden sich in derselben Höhe und ohne stufige Übergänge dazwischen. Durch die Ausbildung des Kreuzungsbereichs 8 als einstückiges Rahmenelement 24 sind insbesondere im Bereich der Querungen 10 die Führungen 11, 12, 13, 14 einstückig miteinander verbunden, so dass es keine Unterbrechungen oder Absätze im Bereich der Querungen 10 gibt.

Im Bereich der Querungen 10 ist das Rahmenelement 24 auf jeweils einer horizontalen Auflagefläche 17 abgestützt. Die Auflagefläche 17 bildet jeweils eine flache Oberseite einer horizontalen Platte 3, die Bestandteil des Gestells 1 ist, oder starr an Gestellbauteilen befestigt ist.

In Fig. 4 ist der Bereich einer der vier Querungen 10 des Rahmenelements 24 perspektivisch wiedergegeben, einschließlich der die gemeinsame Auflagefläche 17 bildenden horizontalen Platte 3 und den vier auf der Platte 3 abgestützten Führungen 11, 12, 13, 14, welche dem Abrollen sowie dem seitlichen Führen der jeweiligen Räder des Verteilerfahrzeugs dienen. Dabei sind die in ihrer Längsrichtung aufeinanderfolgend angeordneten Führungen 11 und 12 Bestandteile der Gasse 5b. Die in ihrer Längsrichtung aufeinanderfolgend angeordneten Führungen 13 und 14 sind Bestandteile der querenden Gasse 6. Durch die einstückige Ausbildung des Rahmenelements 8 sind die Führungen 11, 12, 13, 14 insbesondere im Bereich der Querungen 10 einstückig miteinander ausgebildet.

Jede Führung 11, 12, 13, 14 setzt sich wiederum einstückig zusammen aus einer Laufschiene 20, auf der die Räder des Verteilerfahrzeugs abrollen, und aufrecht stehenden Seitenwänden 21, 22 zu beiden Seiten entlang der Laufschiene 20. Die Seitenwände 21, 22 stehen vorzugsweise senkrecht zu der Laufschiene 20, um so die nicht gelenkten Rollen bzw. Räder des Verteilerfahrzeugs seitlich zu führen. Die Seitenwände 21, 22 können einstückig mit der jeweiligen Laufschiene 20 ausgebildet sein. Es ist aber auch möglich, dass die Seitenwände 21, 22 jeweils als separate Teile ausgebildet sind, welche an der jeweiligen Laufschiene 20 montiert werden können. Die Laufschienen 20 der Führungen 11, 12, 13, 14 sind im Bereich der Querungen 10 einstückig miteinander ausgebildet.

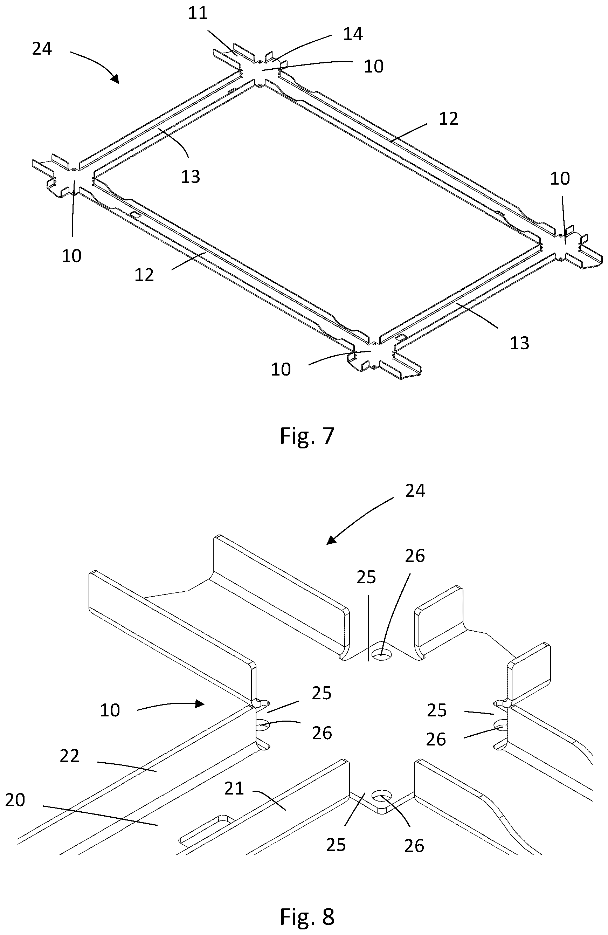

Die Seitenwände 21, 22 erstrecken sich nicht über die gesamte Länge der Führungen 11, 12, 13, 14. Vielmehr fehlen die Seitenwände 21, 22 auf den Endabschnitten der Führungen 11, 12, 13, 14, also auf jenen Abschnitten, welche der in Längsrichtung nächstfolgenden Führung 11, 12, 13, 14 zugewandt sind bzw. welche der Querung 10 zugewandt sind. Die Seitenwände 21, 22 der einzelnen Führungen 11, 12, 13, 14 sind damit voneinander beabstandet und stoßen nicht aneinander. Dies ist auch noch einmal in Fig. 7 und 8 ersichtlich, in welchen lediglich das Rahmenelement 24 mit denen das Rahmenelement 24 bildenden Führungen 11, 12, 13, 14 zu sehen ist.

Im Bereich der Querungen 10 weist das Rahmenelement 24 seitlich abstehende Laschen 25 auf. Bei der hier gezeigten Ausgestaltung weist das Rahmenelement 24 im Bereich jeder Querung 10 vier solcher Laschen 25 auf. Die Laschen 25 erstrecken sich in einer Ebene mit den Laufschienen 20. Die Laschen 25 liegen damit in einem montierten Zustand eben auf der Auflagefläche 17 auf. Die Laschen 25 sind gerade nicht von den Seitenwänden 21, 22 überdeckt, sondern die Seitenwände 21, 22 enden kurz vor den Laschen 25. Die Laschen 25 sind jeweils in einem Eckbereich der Querungen 10 ausgebildet. Jede Lasche 25 weist eine Öffnung 26 bzw. Ausnehmung auf. Über die Laschen 25 kann das Rahmenelement 24 an der Auflagefläche 17 und damit an der Platte 3 befestigt werden.

Die Befestigung des Rahmenelements 24 an der Auflagefläche 17 erfolgt über Verbindungselemente 40. Wie insbesondere in Fig. 4 zu erkennen ist, sind bei der hier gezeigten Ausgestaltung an jeder Querung 10 vier solcher Verbindungselemente 40 vorgesehen. Die Verbindungselemente 40 dienen dabei nicht nur als Befestigung des Rahmenelements 24 an den Auflageflächen 17 bzw. an der Platte 3, sondern auch als eine Führung für die Verteilerfahrzeuge, insbesondere wenn sie in den Querungen 10 die Fahrtrichtung ändern.

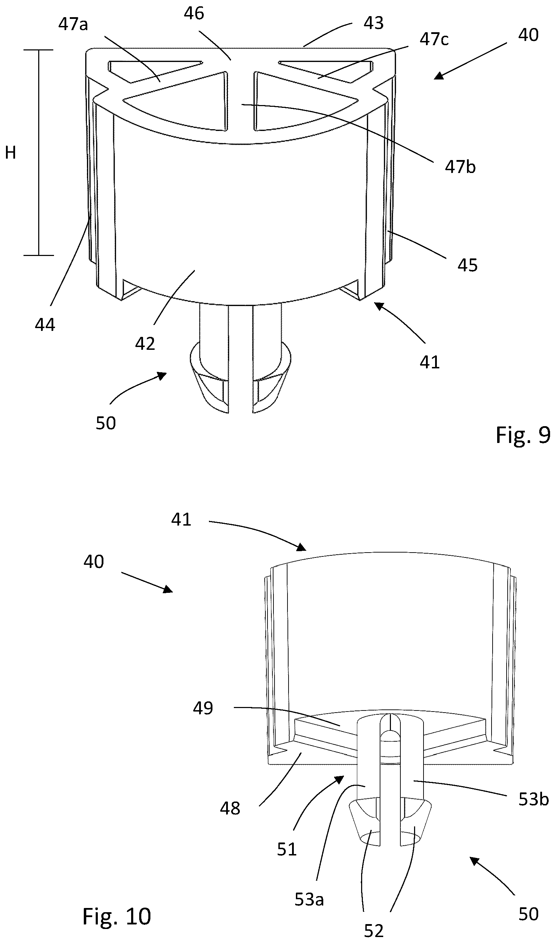

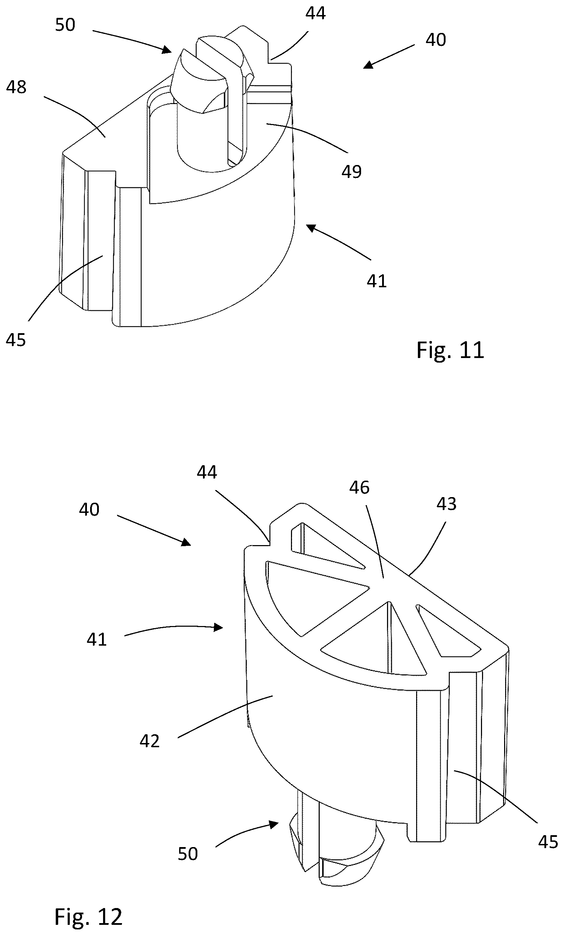

Die Fig. 9 bis 12 zeigen ein Verbindungselement 40 für sich alleine dargestellt.

Das Verbindungselement 40 weist einen Grundkörper 41 auf. Mit dem Grundkörper 41 sitzt das Verbindungselement 40 auf der Lasche 25 des Rahmenelements 24 auf. Der Grundkörper 41 weist bei der hier gezeigten Ausgestaltung, wie insbesondere in Fig. 4 zu erkennen ist, die gleiche Höhe H auf, wie die Seitenwände 21, 22, so dass der Grundkörper 41 mit seiner Oberseite 46 bündig mit den Seitenwänden 21, 22 abschließt.

Das Verbindungselement 40 weist an seinem Grundkörper 41 eine in Richtung Querung 10 zeigende kurvenförmige Außenfläche 42 auf. Mittels dieser kurvenförmigen Außenfläche 42 verbindet das Verbindungselement 40 eine Seitenwand 21, 22 einer Führung 11, 12, 13, 14 mit einer Seitenwand 21, 22 einer sich dazu quer erstreckenden Führung 11, 12, 13, 14, wie insbesondere in Fig. 4 zu erkennen ist. Die kurvenförmige Außenfläche 42 weist eine konvexe Form auf. Die kurvenförmige Außenfläche 42 bildet ungefähr einen Viertelkreis aus.

Weiter weist der Grundkörper 41 eine im montierten Zustand von der Querung 10 wegzeigende gerade Außenfläche 43 auf. Die kurvenförmige Außenfläche 42 und die gerade Außenfläche 43 bilden zusammen die Außenumfangsfläche des Grundkörpers 41 aus.

Das Verbindungselement 40 weist an seinem Grundkörper 41 ferner zwei beabstandet zueinander angeordnete Hinterschnitte 44, 45 auf. In den Hinterschnitten 44, 45 kann jeweils ein Kantenbereich 21a, 22a der Seitenwände 21, 22 formschlüssig aufgenommen sein. Wie in Fig. 4 zu erkennen ist, kann der Kantenbereich 21a der Seitenwand 21 in den Hinterschnitt 44 eingreifen und der Kantenbereich 22a der Seitenwand 22 kann in den Hinterschnitt 44 eingreifen. Die Hinterschnitte 44, 45 sind in Form jeweils einer länglich ausgebildeten Nut ausgebildet. Die Hinterschnitte 44, 45 erstrecken sich jeweils über die gesamte Höhe H des Grundkörpers 41 des Verbindungselements 40. Die Hinterschnitte 44, 45 sind derart an dem Grundkörper 41 angeordnet, dass sie jeweils zwischen der kurvenförmigen Außenfläche 42 und der geraden Außenfläche 43 angeordnet sind. Die kurvenförmige Außenfläche 42 stößt damit nicht unmittelbar an die gerade Außenfläche 43 an, sondern die beiden Außenflächen 42, 43 sind durch die Hinterschnitte 44, 45 voneinander getrennt.

Die Seitenwände 21, 22 greifen mit ihren Kantenbereichen 21a, 22a derart formschlüssig in die Hinterschnitte 44, 45 ein, dass eine möglichst spaltfreie Anbindung zwischen den Seitenwänden 21, 22 und den Verbindungselementen 40 ausgebildet wird. Damit können störende Kanten oder Absätze in dem Kurvenbereich einer Querung 10 vermieden werden, so dass das Verteilerfahrzeug möglichst Geräuscharm und Vibrationsarm die Querungen 10 passieren kann.

Der Grundkörper 41 des Verbindungselements 40 ist zumindest bereichsweise als Hohlprofil ausgebildet ist, wie bei einer Draufsicht auf die Oberseite 46 des Grundkörpers 41 zu erkennen ist. In dem Hohlprofil sind Versteifungsrippen 47a, 47b, 47c ausgebildet. Die Versteifungsrippen 47a, 47b, 47c haben einen gemeinsamen Startpunkt an der geraden Außenflächen 43 und erstrecken sich sternförmig in Richtung der kurvenförmigen Außenfläche 42 von diesem Startpunkt an der geraden Außenfläche 43 aus weg. Die Versteifungsrippen 47a, 47b, 47c sind stegförmig ausgebildet. Die Versteifungsrippen 47a, 47b, 47c ermöglichen die Aufnahme von Kräften, wenn beispielsweise die Verteilerfahrzeuge gegen die Verbindungselemente 40 stoßen.

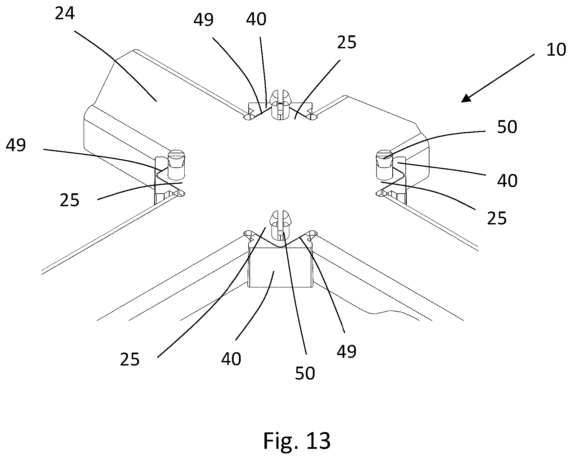

Mit einer der Oberseite 46 gegenüberliegenden Unterseite 48 des Verbindungselements 40 bzw. des Grundkörpers 41 des Verbindungselements 40 liegt das Verbindungselement 40 in dem montierten Zustand auf der Lasche 25 des Rahmenelements 24 auf. Um eine formschlüssige und damit besonders stabile Auflage des Verbindungselements 40 auf der Auflagefläche 17 erreichen zu können, ist an der Unterseite 48 des Grundkörpers 41 eine Kontur 49 zur passgenauen Aufnahme der Lasche 25 ausgebildet, wie insbesondere in Fig. 10, 11 und 13 zu erkennen ist. Durch diese Kontur 49 kann zusätzlich zu einer kraftschlüssigen Verbindung zwischen dem Verbindungselement 40 und dem Rahmenelement 24 bzw. der Lasche 25 des Rahmenelements 24 auch eine formschlüssige Verbindung ausgebildet werden. Das Rahmenelement 24 greift mit seiner Lasche 25 in die Kontur 49 ein, wie insbesondere in Fig. 13 zu erkennen ist. Die Kontur 49 ist dafür derart geformt, dass diese eine Negativform der Lasche 25 ausbildet. Die Kontur 49 ist in Form einer Vertiefung bzw. Aussparung an der Unterseite 48 des Grundkörpers 41 des Verbindungselements 40 ausgebildet. Bei der hier gezeigten Ausgestaltung weist die Kontur 49 eine Dreiecksform auf.

Mittels des Verbindungselements 40 kann eine rastende Verbindung zwischen dem Rahmenelement 24 und der Auflagefläche 17 der Platte 3 ausgebildet werden. Hierfür weist das Verbindungselement einen Rastbereich 50 auf. Der Rastbereich 50 ist an der Unterseite 48 des Grundkörpers 41 angeformt. Der Rastbereich 50 erstreckt sich von der Unterseite 48 weg. Der Rastbereich 50 ist im Bereich der Kontur 49 an die Unterseite 48 angebunden.

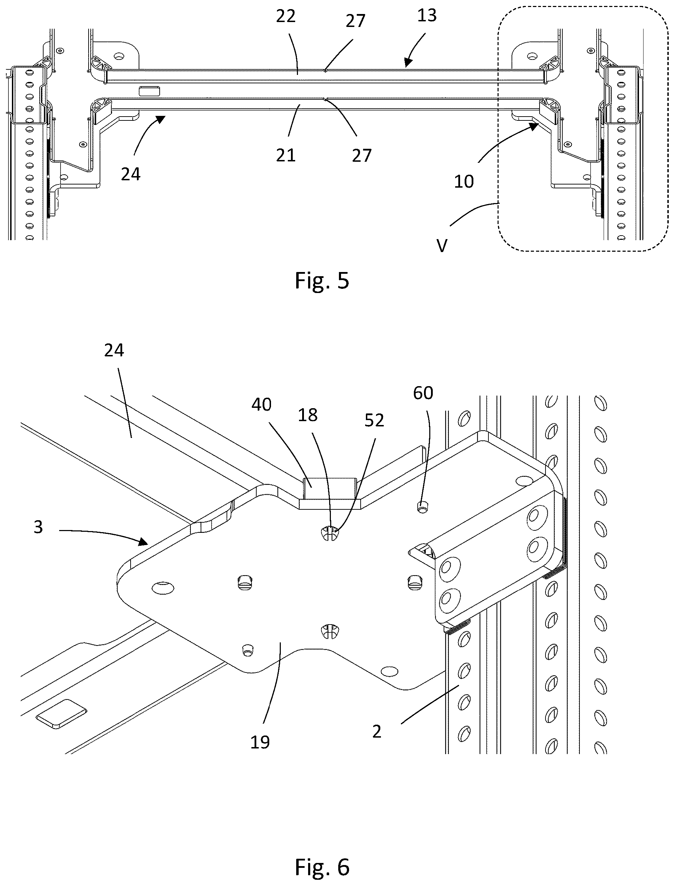

Der Rastbereich 50 weist einen von der Unterseite 48 hervorstehenden Rastzapfen 51 auf, welcher in dem montierten Zustand durch die Öffnung 26 in der Lasche 25 des Rahmenelements 24 und durch eine an der Auflagefläche 17 der Platte 3 ausgebildete Öffnung 18 hindurchtaucht und an einer Unterseite 19 der Platte 3 hinterrastet, wie beispielsweise in Fig. 6 zu erkennen ist. Der Rastzapfen 51 weist eine längliche Form auf. An einem freien Ende des Rastzapfens 51 weist dieser eine Rastnase 52 zum Hintergreifen der Unterseite 19 der Platte 3 auf.

Bei der hier gezeigten Ausgestaltung ist der Rastzapfen 51 zweigeteilt, so dass zwei symmetrisch zueinander geformte Teile 53a, 53b den Rastzapfen 51 ausbilden. Diese beiden Teile 53a, 53b sind zueinander beabstandet, so dass ein Spalt zwischen ihnen ausgebildet ist, wodurch diese relativ zueinander bewegt bzw. federn können. Beim Montieren können diese Teile 53a, 53b aufeinander zu bewegt und dadurch zusammengedrückt werden, um durch die Öffnung 26 der Lasche 25 und durch die Öffnung 18 der Platte 3 hindurchgeführt werden zu können. Sobald die beiden Teile 53a, 53b in die Öffnungen 26, 18 eingreifen, können die Teile 53a, 53b auseinander federn, so dass die an beiden Teilen 53a, 53b ausgebildete Rastnase 52 des Rastzapfens 51 die Unterseite 18 der Platte 3 hintergreifen kann. Es ist auch möglich, dass der Rastzapfen 51 nicht nur aus zwei Teilen 53a, 53b, sondern aus drei oder mehr Teilen ausgebildet ist.

Die Verbindungselemente 40 sind beispielsweise in einem Spritzgussverfahren oder in einem 3D-Druckverfahren aus einem Kunststoffmaterial oder einem Metallmaterial hergestellt.

Die Platte 3 ist mittels einer entsprechenden Konsole unmittelbar an die benachbarte, stabile Stütze 2 angeschraubt. Die Platte 3 ist von solcher Ausdehnung und erstreckt sich so weit bis unter die jeweilige Querung 10 des Rahmenelements 24, dass auch die Führungen 11, 12, 13, 14 des Rahmenelements 24 mit jeweils einem Endabschnitt der Laufschienen 20 auf der Auflagefläche 17 der Platte 3 aufliegen können. Durch diese Dimensionierung der Platte 3 bzw. der Auflagefläche 17 in Bezug auf die Führungen 11 - 14 bzw. das Rahmenelement 24 ist sichergestellt, dass es zu keinem Durchbiegen der Führungen 11 - 14 bzw. des Rahmenelements 24 auf jenem Längsabschnitt kommt, auf dem die Seitenwand 21, 22 endet und die seitlich abstehenden Laschen 25 ansetzen.

Die Verbindungselemente 40 sind sowohl seitlich außerhalb der jeweiligen Laufschiene 20 angeordnet, als auch seitlich außerhalb jener Ebene, in der sich die jeweilige Seitenwand 21, 22 erstreckt.

Zusätzlich zu den Verbindungselementen 40 ist das Rahmenelement 24 auch noch mit Schraubverbindungen 60 an der Platte 3 gesichert, wie in Fig. 2, 4, 5 und 6 zu erkennen ist. Die Schraubverbindung 60 erstreckt sich insbesondere im Bereich der Führungen 11, 12 durch die Laufschiene 20 und die Platte 3 hindurch.

Um die Positionierung und Montage des Rahmenelements 24 auf den Platten 3 zu erleichtern, ist an mindestens zwei sich gegenüberliegend angeordneten Seitenwänden 21, 22 einer oder mehrerer der Führungen 11, 12, 13, 14 eine Positionierhilfe 27 ausgebildet, wie beispielsweise in Fig. 5 zu erkennen ist. Die Positionierhilfe 27 ermöglicht ein Ausrichten des Rahmenelements 24 mittels eines Messgerätes, insbesondere eine Laser-Messgerätes.

Die Positionierhilfe 27 ist hier jeweils in Form einer Aussparung an den Seitenwänden 21, 22 ausgebildet sein, wobei die Aussparung die Form einer Kerbe aufweist. Die Positionierhilfe 27 kann beim Schneiden oder Stanzen des Rahmenelements 24 in das Rahmenelement 24 eingebracht werden.

Das aus einem Metallmaterial ausgebildete Rahmenelement 24 kann in einem Stanz-Biegeverfahren oder einen Laserschneid-Biegeverfahren hergestellt sein.

### Bezugszeichenliste

- 1: Gestell
- 2: vertikales Element, Stütze
- 3: Platte
- 5a: Gasse, Transportgasse
- 5b: Gasse, Transportgasse
- 6: Gasse, Verbindungsgasse
- 8: Kreuzungsbereich
- 10: Querung
- 11: Führung
- 12: Führung
- 13: Führung
- 14: Führung
- 15: Lagerplatz
- 17: Auflagefläche
- 18: Öffnung
- 19: Unterseite
- 20: Laufschiene
- 20a: Kantenbereich
- 21: Seitenwand
- 21a: Kantenbereich
- 22: Seitenwand
- 24: Rahmenelement
- 25: Lasche
- 26: Öffnung
- 27: Positionierhilfe
- 40: Verbindungselement
- 41: Grundkörper
- 42: kurvenförmige Außenfläche
- 43: gerade Außenfläche
- 44: Hinterschnitt
- 45: Hinterschnitt
- 46: Oberseite
- 47a, 47b, 47c: Versteifungsrippe
- 48: Unterseite
- 49: Kontur
- 50: Rastbereich
- 51: Rastzapfen
- 52: Rastnase
- 53a, 53b: Teil
- 60: Schraubverbindung
- H: Höhe

## Patentansprüche

1. Warenlager für das Ein- und Auslagern von auf Ladungsträgern angeordneten Waren oder Warengebinden mittels eines Verteilerfahrzeugs, mit in einem Gestell (1) angeordneten, durch das Verteilerfahrzeug befahrbaren Transportgassen (5a, 5b), mit seitlich der Transportgassen (5a, 5b) in dem Gestell (1) angeordneten Lagerplätzen (15) oder Fördertechnikübergabepositionen für die Ladungsträger, und mit einer ebenfalls durch das Verteilerfahrzeug befahrbaren Verbindungsgasse (6), welche die Transportgassen (5a, 5b) an Querungen (10) kreuzt, wobei Bestandteile der Verbindungsgasse (6) und der Transportgassen (5a, 5b) Führungen (11, 12, 13, 14) sind, die jeweils eine durch das Verteilerfahrzeug befahrbare Laufschiene (20) und Seitenwände (21, 22) längs der Laufschiene (20) aufweisen, wobei ein Kreuzungsbereich (8) einer der Transportgassen (5a, 5b) mit einer der Verbindungsgassen (6) vier Querungen (10) aufweist, wobei der Kreuzungsbereich (8) als ein einstückiges Rahmenelement (24) ausgebildet ist, welches im Bereich der Querungen (10) mittels Verbindungselementen (40) auf einer gestellfesten horizontalen Auflagefläche (17) befestigt ist, wobei die Verbindungselemente (40) jeweils seitlich außerhalb der Laufschiene (20) und seitlich außerhalb der Ebene, in der sich die jeweilige Seitenwand (21, 22) erstreckt, angeordnet sind.

2. Warenlager nach Anspruch 1, **dadurch gekennzeichnet, dass** die Verbindungselemente (40) jeweils eine in Richtung der Querung (10) zeigende kurvenförmige Außenfläche (42) aufweisen, welche im Bereich der Querung (10) eine Seitenwand (21, 22) einer Führung (11, 12, 13, 14) mit einer Seitenwand (21, 22) einer sich quer dazu erstreckenden Führung (11, 12, 13, 14) verbindet.

3. Warenlager nach Anspruch 1 oder 2, **dadurch gekennzeichnet, dass** die Verbindungselemente (40) jeweils mindestens einen Hinterschnitt (44, 45) zur Aufnahme eines Kantenbereichs (21a, 22a) einer Seitenwand (21, 22) einer Führung (11, 12, 13, 14) aufweisen.

4. Warenlager nach einem der Ansprüche 1 bis 3, **dadurch gekennzeichnet, dass** an dem Rahmenelement (24) im Bereich der Querungen (10) seitlich abstehende Laschen (25) angeformt sind, und dass das jeweilige Verbindungselement (40) in eine Öffnung (26) oder Ausnehmung in der Lasche (25) greift.

5. Warenlager nach Anspruch 4, **dadurch gekennzeichnet, dass** das jeweilige Verbindungselement (40) mit einer Unterseite (48) auf der seitlich abstehenden Lasche (25) aufliegt, wobei an der Unterseite (48) des Verbindungselements (40) eine Kontur (49) zur passgenauen Aufnahme der Lasche (25) ausgebildet ist.

6. Warenlager nach einem der Ansprüche 1 bis 5, **dadurch gekennzeichnet, dass** die Verbindungselemente (40) jeweils einen Rastbereich (50) zum rastenden Verbinden des Rahmenelements (24) an der Auflagefläche (17) aufweisen.

7. Warenlager nach Anspruch 6, **dadurch gekennzeichnet, dass** der Rastbereich (50) einen von der Unterseite (48) des jeweiligen Verbindungselements (40) hervorstehenden Rastzapfen (51) aufweist, welcher im montierten Zustand durch die Öffnung (26) oder Ausnehmung in der Lasche (25) des Rahmenelements (24) und durch eine an der Auflagefläche (17) ausgebildeten Öffnung (18) hindurchgreift und an einer Unterseite (19) einer die Auflagefläche (17) aufweisenden Platte (3) hinterrastet.

8. Warenlager nach einem der Ansprüche 1 bis 7, **dadurch gekennzeichnet, dass** die Verbindungselemente (40) jeweils einen Grundkörper (41) aufweisen, welcher zumindest bereichsweise als Hohlprofil ausgebildet ist, wobei in dem Hohlprofil Versteifungsrippen (47a, 47b, 47c) ausgebildet sind.

9. Warenlager nach einem der Ansprüche 1 bis 8, **dadurch gekennzeichnet, dass** die Verbindungselemente (40) jeweils aus einem Kunststoffmaterial oder einem Metallmaterial ausgebildet sind.

10. Warenlager nach einem der Ansprüche 1 bis 9, **dadurch gekennzeichnet, dass** das Rahmenelement (24) zusätzlich zu den Verbindungselementen (40) mit mindestens einer Schraubverbindung (60) an der Auflagefläche (17) befestigt ist.

11. Warenlager nach einem der Ansprüche 1 bis 10, **dadurch gekennzeichnet, dass** das Rahmenelement (24) aus einer Metallplatte ausgeschnitten und zur Ausbildung der Seitenwände (21, 22) gekantet ist.

12. Warenlager nach einem der Ansprüche 1 bis 11, **dadurch gekennzeichnet, dass** an mindestens zwei sich gegenüberliegenden Seitenwänden (21, 22) eine Positionierhilfe (27) zum Ausrichten des Rahmenelements (24) bei einer Montage ausgebildet ist.

13. Warenlager nach Anspruch 12, **dadurch gekennzeichnet, dass** die Positionierhilfe (27) in Form jeweils einer Aussparung an den Seitenwänden (21, 22) ausgebildet ist.
